# EUROPEAN PATENT SPECIFICATION

(11) **EP 3 879 373 B1**
(45) Date of publication and mention of the grant of the patent: **08.02.2023**
(21) Application number: 20216284.8
(22) Date of filing: 22.12.2020
(51) Int. Cl.: G05D 1/02, B62D 1/00, B62D 1/28

(54) **AUTONOMOUS TRAVELING DEVICE AND AUTONOMOUS TRAVELING CONTROL METHOD**
AUTONOME FAHRVORRICHTUNG UND VERFAHREN ZUR STEUERUNG VON AUTONOMER FAHRT
DISPOSITIF DE DÉPLACEMENT AUTONOME ET PROCÉDÉ DE COMMANDE DE DÉPLACEMENT AUTONOME

(30) Priority: 10.03.2020 JP 2020041411
(43) Date of publication of application: 15.09.2021
(73) Proprietor: Ricoh Company, Ltd., Tokyo 143-8555 (JP)
(72) Inventor: KATAYAMA, Hiroshi, Tokyo 143-8555 (JP); OKAMOTO, Toshihiro, Tokyo 143-8555 (JP); TAKAHASHI, Yasufumi, Tokyo 143-8555 (JP)
(74) Representative: Marks & Clerk LLP

(56) References cited:
- EP-A1- 2 573 040
- WO-A1-2020/010047
- US-A1- 2014 067 207

## Description

### BACKGROUND

### Technical Field

The present disclosure relates to an autonomous traveling device and an autonomous traveling control method.

### Related Art

Currently, automated guided vehicles (AGVs) are used to transport objects such as basket carts between areas in factories or warehouses. A guide path (a guide line) is provided with, for example, magnetic tape or optical tape between the areas. The AGV detects the guide path to determine a traveling route and travels along the traveling route (line trace traveling).

The AGV has an automatic disconnection capability to automatically release (disconnect) the basket cart at a disconnection position in a conveyance destination (disconnection area). This capability can reduce the burden on an operator regarding the separation of the basket cart from the AGV.

However, the basket cart disconnected on the guide path blocks the traveling route of a following AGV. Therefore, the operator has to move the disconnected basket cart from the guide path, which is a burden on the operator. Therefore, the disconnection position of the basket cart is set to a position away from the guide path. When the AGV reaches the vicinity of the disconnection position, the AGV shifts from the line trace traveling to autonomous traveling that does not require the guide path, moves to the disconnection position away from the guide path, and disconnects the basket cart. This configuration can obviate the work of moving the automatically disconnected basket cart from the guide path, and thus reduce the burden on the operator.

JP-2014-186680-A discloses a method of turning back an automatic vehicle and driving the automatic vehicle, for the purpose of preparation for reverse traveling at the separation of a basket cart (a carriage).

There is an inconvenience in a case where the AGV is shifted from the line trace traveling to the autonomous traveling and the basket cart is turned and moved to a disconnection position away from the guide path. When the basket cart is to be turned from the stopped state, the resistance to the turning increases due to the frictional force between

casters of the basket cart and a floor surface. Such resistance inhibits drive wheels of the AGV from rotating, making it difficult to move the basket cart, or causes the drive wheels of the AGV to slip, making it difficult to turn the basket cart.

This problem also occurs in the technique of JP-2014-186680-A. Further, this problem becomes more remarkable as the transported object on the basket cart becomes heavier.

PCT Application International Publication No. WO 2020/010047 A1 discloses robotic tugs configured to autonomously maneuver to a desired location to pick up and retrieve an item, such as a load or a cart, nest the item within the robot, transport the item, and deliver the item to a desired location.

European Patent Application Publication No. EP2573040 A1 discloses an automatically guided vehicle for towing a load.

United States Patent Application Publication No. US 2014/0067207 A1 discloses a smart parking assist system and a control method thereof in which a plurality of parking modes are prepared according to driving skill levels of drivers so as to differently set the size of a margin considered in recognition of a parking space or setting of a parking path and to prevent deviation of a final parking position due to driving skill level differences among drivers.

### SUMMARY

In view of the foregoing, an object of the present disclosure is to provide an autonomous traveling device and an autonomous traveling control method that enable smooth turning of the autonomous traveling device during autonomous traveling with a towed cart.

In order to achieve the above-described object, there is provided an autonomous traveling device as described in appended claims. Advantageous embodiments are defined by the dependent claims.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIG. 1 is a diagram illustrating a configuration of a conveyance system according to a first embodiment of the present disclosure;
FIG. 2 is a perspective view of a basket cart, provided with an identification (ID) panel, of the conveyance system illustrated in FIG. 1;
FIG. 3 is a diagram illustrating a logistics warehouse to which the conveyance system illustrated in FIG. 1 is applied;
FIG. 4 is a block diagram illustrating a hardware configuration of a controller of an autonomous traveling robot of the conveyance system illustrated in FIG. 1;
FIG. 5 is a block diagram illustrating functions implemented by a processor of the controller of the autonomous traveling robot illustrated in FIG. 4, executing a travel control program according to an embodiment;
FIGS. 6A and 6B are diagrams illustrating a configuration of a caster of the basket cart illustrated in FIG. 2;
FIGS. 7A, 7B, and 7C are diagrams illustrating force applied to a transported object and the caster of the basket cart illustrated in FIGS. 6A and 6B;
FIGS. 8A, 8B, and 8C are diagrams illustrating the directions of four casters of the basket cart illustrated in FIGS. 6A and 6B, according to turning radii;
FIG. 9 is a flowchart illustrating a flow of autonomous traveling control of the autonomous traveling robot according to the first embodiment;
FIGS. 10A and 10B are diagrams illustrating movement trajectories of the autonomous traveling robot in the autonomous traveling control illustrated in FIG. 9;
FIGS. 11A and 11B are graphs illustrating speed values input to the autonomous traveling robot in the conveyance system according to the first embodiment and a comparative example;
FIGS. 12A and 12B are graphs illustrating the relationship between the angle (in degrees) of each caster of the basket cart and the time (in seconds), respectively corresponding to FIGS. 11A and 11B;
FIG. 13 is a flowchart illustrating a flow of autonomous traveling control of an autonomous traveling robot in a conveyance system according to a second embodiment;
FIGS. 14A to 14D illustrate a movement trajectory of the autonomous traveling robot in autonomous traveling control illustrated in FIG. 13;
FIG. 15 is a graph illustrating speed values input to the autonomous traveling robot of the conveyance system illustrated in FIG. 13;
FIG. 16 is a flowchart illustrating the flow of autonomous traveling control of an autonomous traveling robot in a conveyance system according to a third embodiment;
FIGS. 17A to 17D illustrate a movement trajectory of an autonomous traveling robot in autonomous traveling control according to a fourth embodiment;
FIG. 18 is a graph illustrating speed values input to the autonomous traveling robot of the conveyance system according to the fourth embodiment;
FIG. 19 is a flowchart illustrating the flow of autonomous traveling control of an autonomous traveling robot in a conveyance system according to a fifth embodiment; and
FIGS. 20A to 20D illustrate a movement trajectory of the autonomous traveling robot in the autonomous traveling control illustrated in FIG. 19.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

Hereinafter, a conveyance system according to an embodiment of the present disclosure is described with reference to the accompanying drawings.

A first embodiment is described below.

### System Configuration

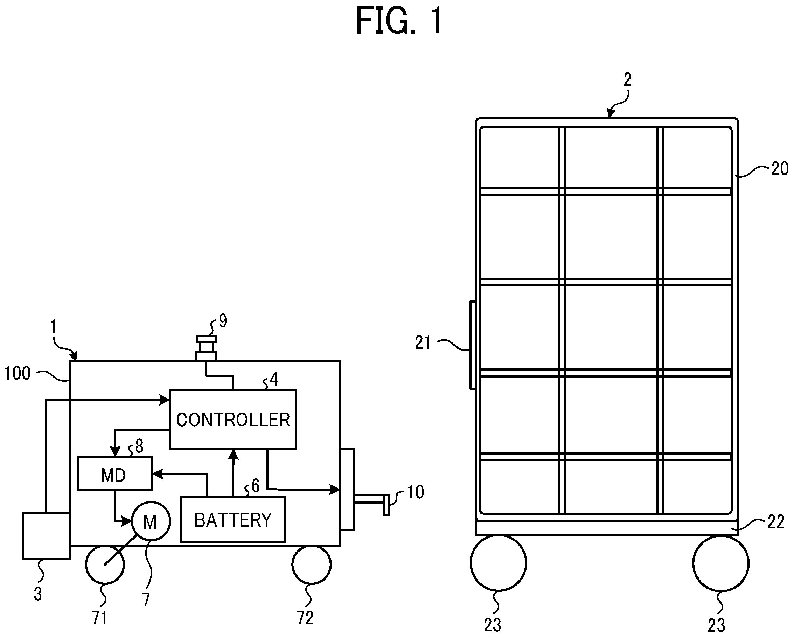

FIG. 1 is a diagram illustrating a configuration of a conveyance system according to a first embodiment of the present disclosure not covered by the appended claims. As illustrated in FIG. 1, the conveyance system according to the first embodiment includes an autonomous traveling robot 1 (an example of an autonomous traveling device) and a basket cart 2 (an example of a towed cart). The autonomous traveling robot 1 is an automated guided vehicle (AGV). The autonomous traveling robot 1 automatically connects to the basket cart 2, pulls (tows) the basket cart 2 to a desired conveyance destination, and disconnects the basket cart 2 therein. The conveyance system according to the first embodiment may include one autonomous traveling robot 1 and one basket cart 2, or may include a plurality of autonomous traveling robots 1 and a plurality of basket carts 2.

The autonomous traveling robot 1 includes a robot body 100, a magnetic sensor 3, a controller 4, a power supply 6 (a battery), a power motor 7, a motor driver 8, a laser range scanner 9, a coupling device 10, drive wheels 71, and driven wheels 72. The laser range scanner 9 recognizes the surrounding environment of the autonomous traveling robot 1.

In the conveyance system according to the present embodiment, a guide tape (magnetic tape) indicating a traveling route is provided on the floor surface on which the autonomous traveling robot 1 travels. The autonomous traveling robot 1 detects the magnetic tape with the magnetic sensor 3 to recognize the traveling route, and automatically travels.

In the present embodiment, the magnetic tape is provided on the floor surface to indicate the traveling route, but, alternatively, an optical tape may be provided on the floor surface to indicate the traveling route. When an optical tape is used, a reflective sensor, an image sensor, or the like is used instead of the magnetic sensor 3.

Further, the autonomous traveling robot 1 can recognize the current self-position and perform autonomous traveling by collating a two-dimensional or three-dimensional map with the detection result of the laser range scanner 9. Sensors usable as the laser range scanner 9 include a laser range finder (LRF) that measures the distance to an object based on the reflected light of the laser beam emitted to the object, a stereo camera, and a depth camera.

The controller 4 of the autonomous traveling robot 1 controls driving of the power motor 7 via the motor driver 8 based on the detection result of the magnetic sensor 3 or the laser range scanner 9. As a result, the drive wheels 71 are rotated via the power motor 7, and the autonomous traveling robot 1 automatically travels.

The basket cart 2 includes a tetragonal bottom plate 22 to hold a basket 20, casters 23 disposed at four corners of the bottom plate 22, and an identification (ID) panel 21 (an identifier) disposed on a side face of the basket 20.

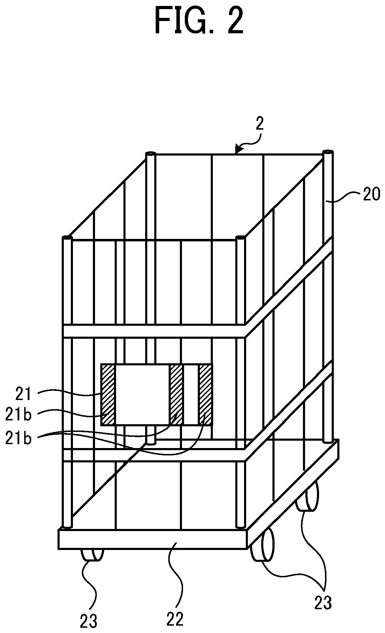

The ID panel 21 provided with a recognition marker is attached to the basket cart 2 placed at a predetermined position. For the marker, a strip-shaped retroreflective tape 21b (illustrated in FIG. 2) or the like is used. The retroreflective tape 21b includes coded information of identification number information (ID information) of the basket cart 2, conveyance destination information such as a conveyance position, and conveyance priority information. The identification number information (ID information) of the basket cart 2 is recognized by reference to a table or the like.

The autonomous traveling robot 1 includes a marker reader. The marker reader includes the laser range scanner 9 and a decoder. As one example, in the present embodiment, the controller 4 has the function of the decoder. The controller 4 recognizes the marker code from the detection result of the laser range scanner 9. The decoder of the controller 4 decodes the code information of the recognized marker, thereby obtaining the identification number information of the basket cart 2, the conveyance destination information, and the priority information.

The retroreflective tape 21b is used as the marker on the basket cart 2. The autonomous traveling robot 1 reads the retroreflective tape 21b on the ID panel 21 with the laser range scanner 9, such as a laser range finder (LRF) to acquire the distance from the surrounding environment. The controller 4 calculates the position coordinates of the ID panel 21 from the distance information indicating the distance between the laser range scanner 9 and the ID panel 21 whose position is recognized by the laser range scanner 9. The controller 4 controls the drive of the power motor 7 using the calculated position coordinates of the ID panel 21 to move the autonomous traveling robot 1 to a position in front of the ID panel 21 of the basket cart 2.

FIG. 2 is a perspective view of the basket cart 2 including the ID panel 21. As one example, as illustrated in FIG. 2, the ID panel 21 is at a substantially center portion on the front side of the basket cart 2. The ID panel 21 is removable from the basket cart 2 and is installed by an operator at a predetermined position, such as a position on a skeleton (a vertical bar) at the center of the basket cart 2.

In order to connect (couple) with the basket cart 2, the autonomous traveling robot 1 needs to detect the distance to and angle with the basket cart 2, to move to the position of the basket cart 2. However, in a configuration in which the laser range scanner 9 recognizes the shape of the basket cart 2, the shape to be recognized changes depending on the stack condition of the basket cart 2. Such change makes it difficult to accurately detect the distance and the angle between the basket cart 2 and the basket cart 2. In view of the foregoing, in the conveyance system according to the first embodiment, the laser range scanner 9 of the autonomous traveling robot 1 detects the ID panel 21 on the basket cart 2. As a result, the controller 4 of the autonomous traveling robot 1 can accurately detect the distance from the basket cart 2 and the angle therewith.

The conveyance system according to the present embodiment using the autonomous traveling robot 1 automates transport of a transport target, such as the basket cart 2, provided with casters in a logistics warehouse (a logistics warehouse) or the like. The transport action of the autonomous traveling robot 1 is divided into three actions (1) to (3):
(1) search a transport target and connect to the transport target in a temporary storage area;
(2) travel in a travel area (line trace traveling and autonomous traveling); and
(3) search for a storage location in a storage area and disconnect (unload) the transport target (the basket cart 2.

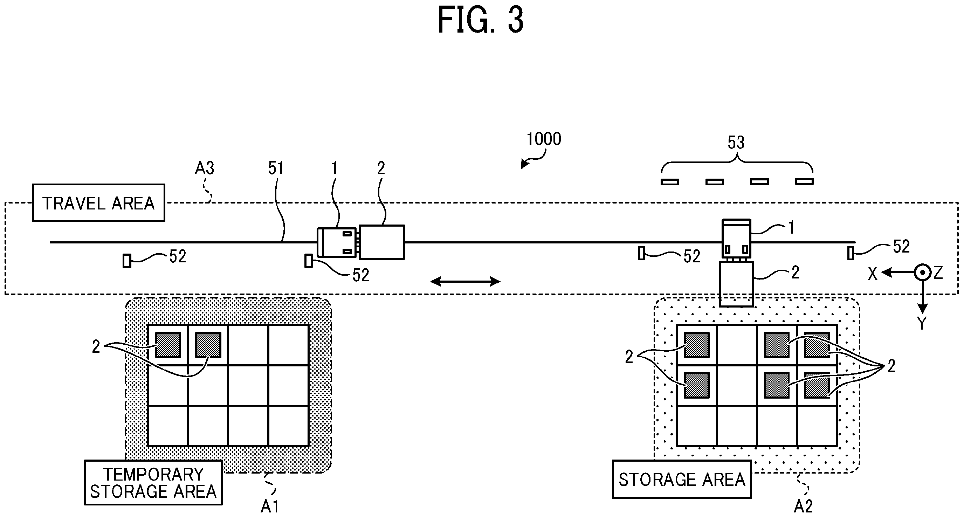

FIG. 3 is a diagram illustrating a logistics warehouse 1000 to which the conveyance system is applied. FIG. 3 is a view of the logistics warehouse 1000 as viewed from the ceiling side. In FIG. 3, the XY plane is parallel to the floor surface, and the Z axis indicates the floor-ceiling direction. In the logistics warehouse 1000 illustrated in FIG. 3, a temporary storage area A1 of the above (1) is, for example, a place where packages after picking (collection work in the warehouse) or unloaded packages are disposed.

A storage area A2 is, for example, an area in front of a truck parking position of a truck berth for each direction, or an area in front of an elevator in a case where the package is transferred to another floor by the elevator. Further, a travel area A3 indicated by an arrow in FIG. 3 is a reciprocating route of the autonomous traveling robot 1 between the temporary storage area A1 and the storage area A2.

The autonomous traveling robot 1 moves with navigation based on the recognition of the line of magnetic tape on the floor with a sensor. Further, the autonomous traveling robot 1 detects area marks 52 next to the line to determine the area. The ID panel 21 includes information on the storage area A2 as the conveyance destination information and the priority information.

Further, a plurality of retroreflective tapes 53, which are reflective materials, are disposed at positions separate from the storage area A2. The retroreflective tapes 53 are disposed on the opposite side of the storage area A2 with the traveling line 51 interposed therebetween. The plurality of retroreflective tapes 53 are disposed at positions that can be detected by the laser range scanner 9 of the autonomous traveling robot 1. The autonomous traveling robot 1 performs a self-position estimation based on the installation information of the plurality of retroreflective tapes 53.

As illustrated in FIG. 3, the line of the magnetic tape for guiding the autonomous traveling robot 1 is provided in the travel area A3 as a traveling line 51 on which the autonomous traveling robot 1 travels. Further, in the travel area A3, the area marks 52 are disposed corresponding to respective start positions and respective end positions of the temporary storage area A1 and the storage area A2, in the vicinity of the traveling line 51. The autonomous traveling robot 1 recognizes the area mark 52, to recognize the area where the autonomous traveling robot 1 itself is located.

As will be described later, in the conveyance system according to the first embodiment, when the autonomous traveling robot 1 recognizes the temporary storage area A1 or the storage area A2 based on the area mark 52, the traveling mode of the autonomous traveling robot 1 autonomously shifts from the line trace traveling mode to the autonomous traveling mode. When the mode shifts to the autonomous traveling mode, the controller 4 controls the autonomous traveling robot 1 to gradually turn to a predetermined angle while moving forward. This operation enables the autonomous traveling robot 1 to smoothly turn during autonomous traveling.

In the first embodiment, the travel area A3 is provided with the traveling line 51 using the magnetic tape for guiding the autonomous traveling robot 1, but the area marks may be disposed at predetermined intervals. In this case, for traveling, the autonomous traveling robot 1 may determine the self-position from the rotation speeds of the drive wheels 71 and the driven wheels 72 between the area mark.

As one example, in FIG. 3, the temporary storage area A1 and the storage area A2 are located at a short distance from the traveling line 51. The autonomous traveling robot 1 searches the temporary storage area A1 or the storage area A2 while traveling along the traveling line 51. In response to a detection of the basket cart 2 to be transported in the temporary storage area A1, the autonomous traveling robot 1 shifts to the autonomous traveling mode and connects to the basket cart 2. Then, the automatic robot 1 transfers the connected basket cart 2 to the storage area A2, searches for an empty address from the traveling line 51, performs turning control described later, and disconnects the basket cart 2 on the empty address area.

### Hardware Configuration of Controller

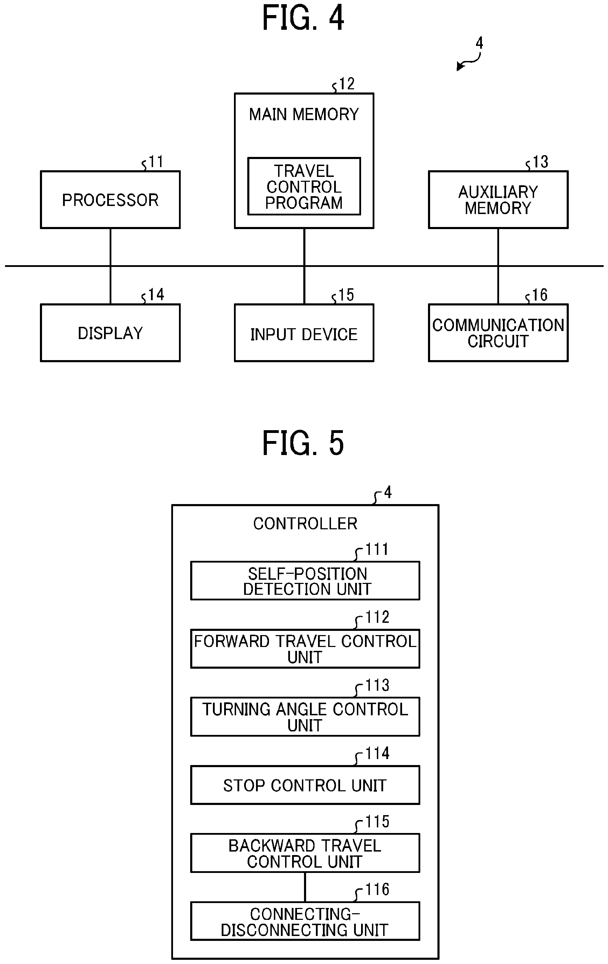

FIG. 4 is a block diagram illustrating a hardware configuration of the controller 4 of the autonomous traveling robot 1. As illustrated in FIG. 4, the controller 4 includes a processor 11 such as a central processing unit (CPU) and a graphics processing unit (GPU), and a main memory 12 such as a random access memory (RAM) and a read only memory (ROM). The controller 4 further includes an auxiliary memory 13 such as a solid state drive (SSD), a display 14, an input device 15 such as a keyboard, and a communication circuit 16 such as a wireless communication interface.

The processor 11 executes various programs stored in the main memory 12 or the auxiliary memory 13, to control the entire operation of the controller 4 (the autonomous traveling robot 1). As will be described in detail later, the main memory 12 (or the auxiliary memory 13) stores a travel control program for travel control in the autonomous travel mode. In the autonomous traveling mode, the processor 11 smoothly controls the turning of the autonomous traveling robot 1 by controlling the rotation of the drive wheels 71 via the power motor 7 based on the travel control program.

Alternatively, the travel control program may be provided, stored in a computer-readable storage medium such as a compact disc read-only memory (CD-ROM), a flexible disk (FD), a compact disc recordable (CD-R), or a digital versatile or video disk (DVD), in a file in installable or executable format. Further, the travel control program may be stored in a storage device connected to a network such as the Internet, and may be downloaded and provided via the network.

### Functional Configuration of Processor

FIG. 5 is a block diagram illustrating functions implemented by the processor 11 of the controller 4 executing the travel control program. As illustrated in FIG. 5, the processor 11 executes the travel control program to implement a self-position detection unit 111, a forward travel control unit 112, a turning angle control unit 113 (one example of a turning control unit), a stop control unit 114, a backward travel control unit 115, and a connecting-disconnecting unit 116.

The self-position detection unit 111 collates the two-dimensional or three-dimensional map with the detection result of the laser range scanner 9, thereby recognizing the current position of the autonomous traveling robot 1 itself and enabling the autonomous traveling. The forward travel control unit 112 controls the drive wheels 71 to advance the autonomous traveling robot 1. The turning angle control unit 113 controls the drive wheels 71 to turn the autonomous traveling robot 1 by a predetermined angle. The stop control unit 114 stops the autonomous traveling robot 1. The backward travel control unit 115 controls the drive wheels 71 so that the autonomous traveling robot 1 moves back. The connecting-disconnecting unit 116 controls the connecting and disconnecting of the basket cart 2 with the autonomous traveling robot 1.

### Caster Configuration

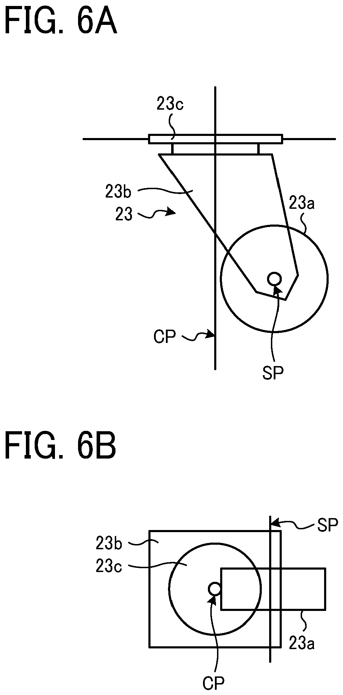

FIGS. 6A and 6B are diagrams illustrating a structure and a feature of the caster 23 of the basket cart 2. The caster 23 has a swivel axis CP that is perpendicular to the floor surface. The caster 23 swivels, about the swivel axis CP, parallel to the contact surface. Further, a wheel 23a of the caster 23 is rotatably supported by a wheel holder 23b of the so that a rotation axis SP of the wheel 23a is parallel to the floor surface. As the positional relationship therebetween, the swivel axis CP of the caster 23 and the rotation axis SP of the wheel 23a are at a distance and perpendicular to each other. Therefore, the caster 23 can turn in any direction of travel and roll, being pulled from a pedestal 23c side.

In a case where the wheels 23a rolls while the direction of the caster 23 does not change (for example, moves to the left in FIG. 6A), the caster 23 can move when the force to pull the pedestal 23c is greater than the rolling resistance around the rotation axis SP of the wheel 23a.

On the other hand, in a case where wheels 23a rolls while the caster 23 changes the direction, the force to pull the pedestal 23c should be greater than both the rolling resistance around the swivel axis CP of the wheel holder 23b and the rolling resistance around the rotation axis SP. That is, for the caster 23 to roll with the direction changing, the force to pull the pedestal 23c needs to be greater than the force for rolling in the same direction.

Further, as the load weight of the basket cart 2 increases, the force to press the wheel 23a of each caster 23 of the basket cart 2 against the floor surface increases. Therefore, the frictional force between the wheel 23a of the caster 23 and the floor surface increases. As a result, the rolling resistance of the wheel holder 23b around the swivel axis CP and the rolling resistance around the rotation axis SP increase.

In view of the foregoing, in order to change the direction of the wheel 23a of the caster 23, the pulling force should be greater than the force required for the caster 23 to roll in the same direction. Further, as the load weight of the basket cart 2 increases, the required force increases.

### Force Applied to Caster of Basket Cart

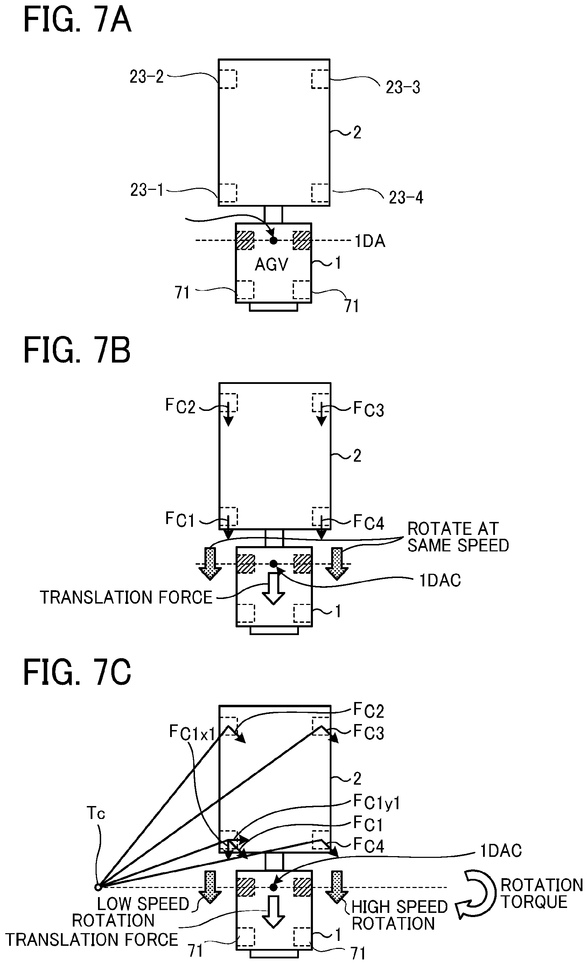

FIG. 7A illustrates the autonomous traveling robot 1 and the basket cart 2 in a stopped state. FIG. 7B illustrates the autonomous traveling robot 1 and the basket cart 2 moving straight forward. FIG. 7C illustrates the autonomous traveling robot 1 and the basket cart 2 in a turning state. The basket cart 2 generally includes the four casters 23 (23-1 to 23-4 in FIG. 7A). As illustrated in FIG. 7B, when the autonomous traveling robot 1 performs translation (moves straight) only, the two drive wheels 71 of the autonomous traveling robot 1 are rotated at the same speed to cause a downward force in FIG. 7B. As a result, the basket cart 2 can be towed. The direction of the force applied to each caster 23 (the pedestal 23c in particular) is the same.

Next, a case of turning about a rotation center Tc as illustrated in FIG. 7C is considered. At this time, the autonomous traveling robot 1 rotates the drive wheel 71 on the inner side of the turn at a low speed and rotates the drive wheel 71 on outer side of the turn at a high speed. This action can generate a translation direction component (i.e., translational force) and a rotation component around the rotation center Tc (i.e., rotation torque).

At the time of turning illustrated in FIG. 7C, the closer (e.g., the casters 23-1 and 23-4 in FIG. 7A) of the four casters 23 of the basket cart 2 to the drive shaft of the autonomous traveling robot 1 receive force (e.g., forces Fci and F_{C4}) in a direction closer to the direction of the translational force of the autonomous traveling robot 1. Consider the case where the rotation center Tc is farther from the autonomous traveling robot 1 than the position illustrated in FIG. 7C. For such a turn that the turning radius is large enough, the caster 23 (e.g., the casters 23-1 and 23-4 in FIG. 7A) closer to the drive wheels 71 of the autonomous traveling robot 1 only rolls without changing the direction.

On the other hand, forces F_{C2} and F_{C3} applied to the casters 23-2 and 23-3 (see FIG. 7A) far from the drive wheels 71 of the autonomous traveling robot 1 are at an angle from the translational direction, as compared with forces Fci and F_{C4} applied to the casters 23-1 and 23-4. Known from this are that, when the turning radius is small, the casters 23 close to the drive wheels 71 of the autonomous traveling robot 1 also need to be turned, and the angle thereof is also large.

From the above, as the turning radius decreases, the number of the casters 23 need to be turned at the same time increases, and the required force increases.

### Point in Turning Basket Cart

In order to change the direction of the caster 23 for turning the basket cart 2, the pedestal 23c of the caster 23 is pulled in the direction in which the basket cart 2 is to be moved. For pulling the pedestal 23c, the method for applying a greatest force to the pedestal 23c with a small force is pulling the pedestal 23c from the direction in which the pedestal 23c is to be advanced.

However, a claw of the autonomous traveling robot 1 engaging the basket cart 2 for towing is at a predetermined position of the short side or the long side of the basket cart 2. Therefore, it is difficult to change the position of the claw (change the direction in which the traction force acts) depending on the desired direction in which the basket cart 2 is moved. Therefore, in order for the autonomous traveling robot 1 to apply a force in a different direction from the forward direction to the pedestal 23c of the caster 23 of the basket cart 2, torque (rotation torque) for turning the basket cart 2 is generated around the rotation center Tc of the autonomous traveling robot 1.

As an autonomous traveling robot, like the autonomous traveling robot 1 in the present embodiment, that drives the left and right drive wheels 71 by respective motors, the method for applying the rotation torque to the towed basket cart 2 is as follows. Similar to the case of turning of the autonomous traveling robot 1 itself (without the basket cart 2), a speed difference is caused between the left and right drive wheels 71, thereby generating the rotation torque around the rotation center Tc.

The force (hereinafter referred to as "propulsion") that the autonomous traveling robot 1 can generate is determined by the upper limit of the motor output. Alternatively, in a case where the floor surface is slippery and the maximum frictional force is smaller than the propulsion that can be generated, the propulsion is up to the maximum frictional force. In either case, there is an upper limit.

The rotation torque that the autonomous traveling robot 1 can is generally represented by the product of the propulsion and the turning radius (rotation torque = propulsion × turning radius). Therefore, when the propulsion is constant, the rotation torque can be increased as the turning radius increases. On the contrary, when the turning radius is small, the rotation torque that can be applied to the basket cart 2 is small.

Based on the above physical properties, a guideline for turning the basket cart 2 while reducing the resistance is reducing the angle between the current direction of the caster 23 and the direction of the force applied to the caster 23. That is, increasing the turning radius suffices. Alternatively, the turning radius at the start of turning is set to a large angle, and the turning radius is gradually or stepwise reduced as the direction of the caster 23 changes.

### Orientations of Four Casters corresponding to Turning Radius

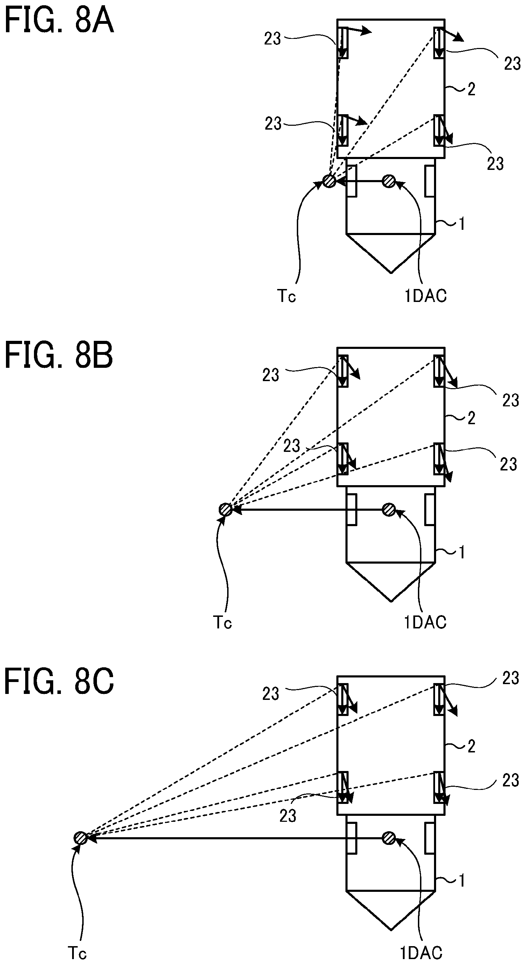

FIGS. 8A, 8B, and 8C are diagrams illustrating the orientations of the four casters 23 of the basket cart 2 according to the turning radius. FIG. 8A illustrates the orientation of each caster 23 corresponding to a short turning radius. FIG. 8B illustrates the orientation of each caster 23 corresponding to a medium turning radius. FIG. 8C illustrates the orientation of each caster 23 corresponding to a long turning radius.

As the turning radius is increased in the order from FIG. 8A to FIG. 8C, the angle between the current orientations of the four casters 23 and the orientations of the forces applied to the casters 23 gradually decreases. Thus, consideration of the turning radius enables the autonomous traveling robot 1 to turn while towing the basket cart 2.

### Autonomous Traveling Control

In consideration of the above, at the shift from the line trace traveling mode to the autonomous traveling mode, the autonomous traveling robot 1 of the conveyance system according to the first embodiment turns while moving forward, thereby reducing the frictional force between each caster 23 of the basket cart 2 and the floor surface. Accordingly, the autonomous traveling robot 1 can turn smoothly.

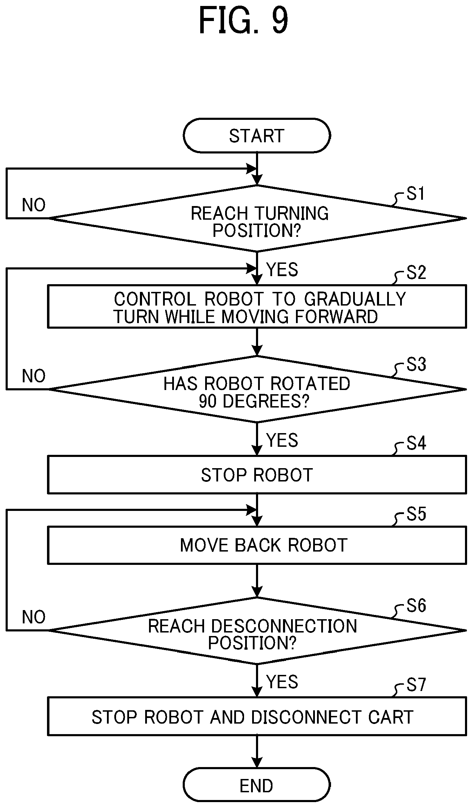

Specifically, when the autonomous traveling robot 1 moves to the front of the space for disconnecting the basket cart 2 in the line trace traveling mode, the processor 11 of the controller 4 of the autonomous traveling robot 1 shifts to the autonomous traveling mode. At the shift to the autonomous traveling mode, the processor 11 executes the travel control program stored in the main memory 12 and performs the autonomous traveling control illustrated in the flowchart in FIG. 9.

That is, when the mode shifts to the autonomous traveling mode, in step S1, the self-position detection unit 111 illustrated in FIG. 5 collates the two-dimensional or three-dimensional map with the detection result of the laser range scanner 9. Thus, the self-position detection unit 111 recognizes the current position (self-position of the autonomous traveling robot 1) and determines whether or not the current position is the turning position. In response to a determination that the current position is the turning position of the autonomous traveling robot 1 (step S1: Yes), the process proceeds to step S2.

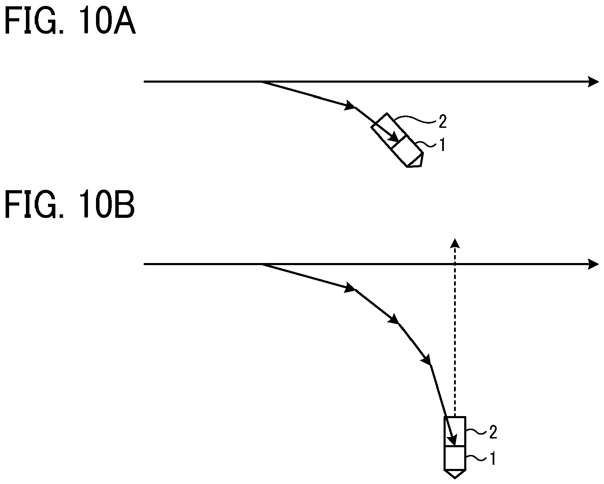

In step S2, the forward travel control unit 112 and the turning angle control unit 113 generate a speed signal and a rotational angular velocity signal to cause the autonomous traveling robot 1 to gradually turn while moving forward. An engine board in the subsequent stage of the controller 4 converts the speed signal and the rotational angular velocity signal into an angular velocity signal for the left drive wheel 71 and an angular velocity signal for the right drive wheel 71 of the autonomous traveling robot 1. The converted signals are supplied to the motor driver 8. The motor driver 8 drives the left and right drive wheels 71 based on the supplied angular velocity signals. As a result, as illustrated in FIG. 10A, the autonomous traveling robot 1 is controlled to gradually turn while moving forward. Controlling the autonomous traveling robot 1 to gradually turn while moving forward can reduce the frictional force between the casters 23 of the basket cart 2 and the floor surface, thereby turning the autonomous traveling robot 1 and the basket cart 2 smoothly.

The turning angle control unit 113 continues the turning control and then determines whether or not the autonomous traveling robot 1 has reached the position turned 90 degrees as illustrated in FIG. 10B (step S3). Based on a determination that the autonomous traveling robot 1 has reached the position turned 90 degrees, which is one example of a moving-back position (step S3: Yes), the stop control unit 114 supplies a stop signal to the motor driver 8 to stop the autonomous traveling robot 1 (step S4). As a result, as illustrated in FIG. 10B, the autonomous traveling robot 1 stops with the rear side of the basket cart 2 facing the disconnection position for the basket cart 2.

Next, the backward travel control unit 115 supplies the motor driver 8 with a moving-back signal for moving back the autonomous traveling robot 1 (step S5). As a result, the autonomous traveling robot 1 moves back straight as illustrated by the dotted arrow in FIG. 10B.

The self-position detection unit 111 determines whether or not the autonomous traveling robot 1 has reached the disconnection position (an example of a target position) for the basket cart 2 (step S6). Based on a determination that the autonomous traveling robot 1 has reached the disconnection position for the basket cart 2 (step S6: Yes), the stop control unit 114 stops the autonomous traveling robot 1. Then, the connecting-disconnecting unit 116 controls the autonomous traveling robot 1 to disconnect the basket cart 2 (step S7). This operation can cause the autonomous traveling robot 1 to smoothly turn (rotate) to move to the disconnection position and disconnect the basket cart 2 from the autonomous traveling robot 1.

The first embodiments provides the following effects.

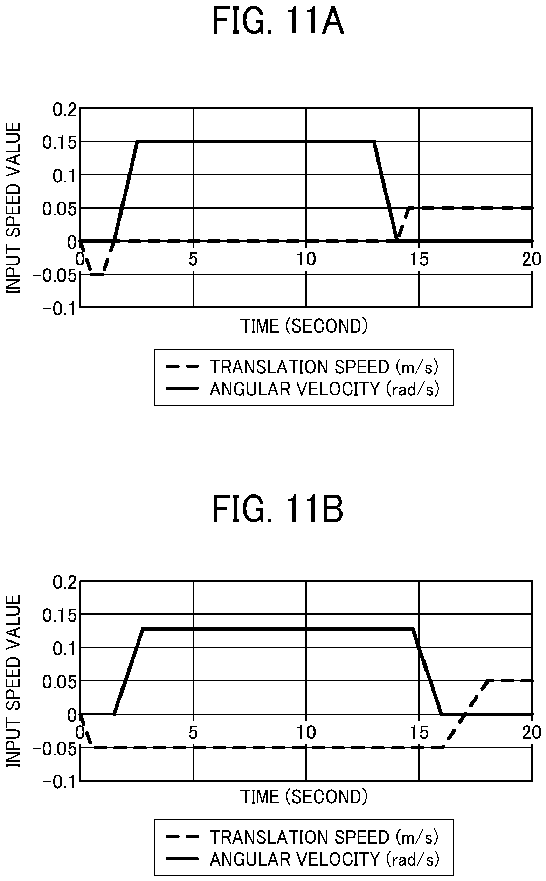

FIGS. 11A and 11B are graphs illustrating speed input values in the conveyance system according to the first embodiment and a comparative example. FIG. 11A illustrates the speed input value of the comparative example. FIG. 11B illustrates the speed input value used in the first embodiment. In FIGS. 11A and 11B, the solid line graph represents the rotational angular velocity (rad/s), and the dotted line graph represents the translational speed (m/s).

As can be seen from FIG. 11A, in the comparative example, the rotational angular velocity signal is input in a state where the translational speed is "0". In this case, the autonomous traveling robot 1 tries to turn from the stopped state. Therefore, the turning is difficult due to the frictional force between the casters 23 and the floor surface.

By contrast, in the first embodiment, as illustrated in FIG. 11B, the rotational angular velocity signal is input in a state where the autonomous traveling robot 1 is translated at a low speed. In other words, in the first embodiment, the signal of rotational angular velocity component (one example of a turning signal) is input, together with the signal of translation component (one example of a translation signal). These two components enable the autonomous traveling robot 1 to turn in a state where the frictional force between the caster 23 and the floor surface is reduced. Accordingly, the autonomous traveling robot 1 can turn smoothly.

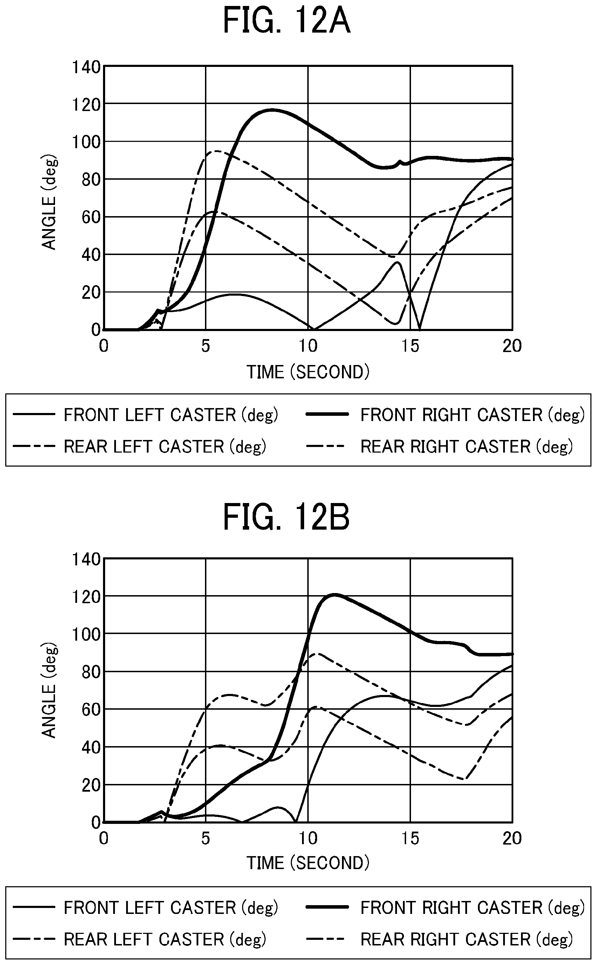

FIGS. 12A and 12B are graphs illustrating the relationship between the angle (in degrees) of each caster 23 and the time (in seconds). FIG. 12A is a graph illustrating the relationship between the angle (in degrees) and the time (in seconds) of each caster 23 in the comparative example illustrated in FIG. 11A. FIG. 12B is a graph illustrating the relationship between the angle (in degrees) and the time (in seconds) of each caster 23 in the first embodiment. In FIGS. 12A and 12B, the thick solid line graph corresponds to the caster 23-1 (in FIG. 7) on the front right of the basket cart 2, and the two-dot chain line graph corresponds to the caster 23-2 (in FIG. 7) on the rear right of the basket cart 2. Similarly, in FIGS. 12A and 12B, the alternate long and short dashed-line graph corresponds to the caster 23-3 (in FIG. 7A) on the rear left of the basket cart 2, and the thin solid line graph corresponding to the caster 23-4 (in FIG. 7A) on the front left of the basket cart 2.

As in the comparative example, when the autonomous traveling robot 1 turns with input of the rotational angular velocity signal in the state where the translation speed is "0", as illustrated in FIG. 12A, each caster 23 is given force that causes the angle to significantly change immediately after the start of turning. Since the frictional force between the caster 23 and the floor surface is large immediately after the start of turning, turning immediately is difficult.

By contrast, in the first embodiment, the autonomous traveling robot 1 turns while moving forward. Therefore, as illustrated in FIG. 12B, the autonomous traveling robot 1 takes time to shift to the turning so that the autonomous traveling robot 1 can turn in a state where the frictional force between the casters 23 and the floor surface is reduced. Therefore, the autonomous traveling robot 1 can turn smoothly.

A conveyance system according to a second embodiment is described below. In the first embodiment described above, the autonomous traveling robot 1 is turned up to 90 degrees at a time. By contrast, in the second embodiment, the autonomous traveling robot 1 is controlled to turn in multiple stages, for example, by 45 degrees in each stage (an example of one of the plurality of split turning angles). In this example, the autonomous traveling robot 1 can turn and move back in a narrow range. Note that the second embodiment described below is different only in this respect from the first embodiment as described above. Accordingly, only the difference is described below, and redundant description is omitted.

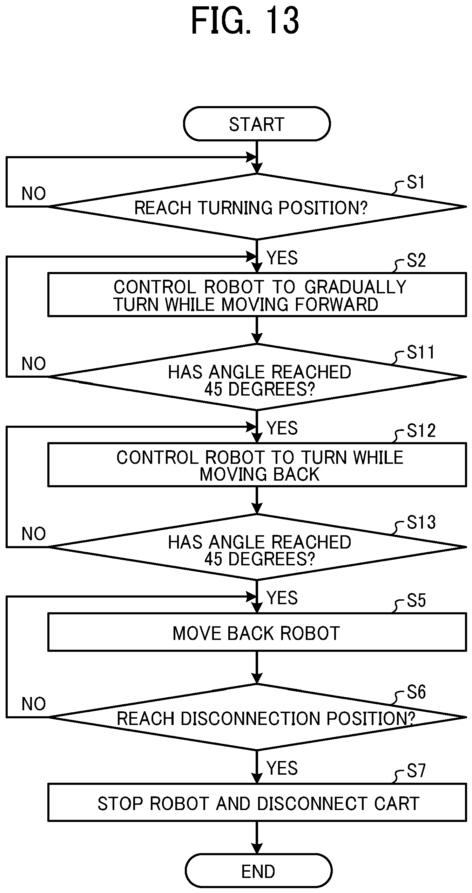

FIG. 13 is a flowchart illustrating the flow of autonomous traveling control of the autonomous traveling robot 1 in the conveyance system according to the second embodiment. In the flowchart of FIG. 13, similar to the first embodiment described above, the autonomous traveling robot 1 that has reached the turning position is controlled to turn while moving forward (steps S1 and S2).

In the second embodiment, in step S11, the turning angle control unit 113 determines whether or not the turning angle of the autonomous traveling robot 1 has reached 45 degrees.

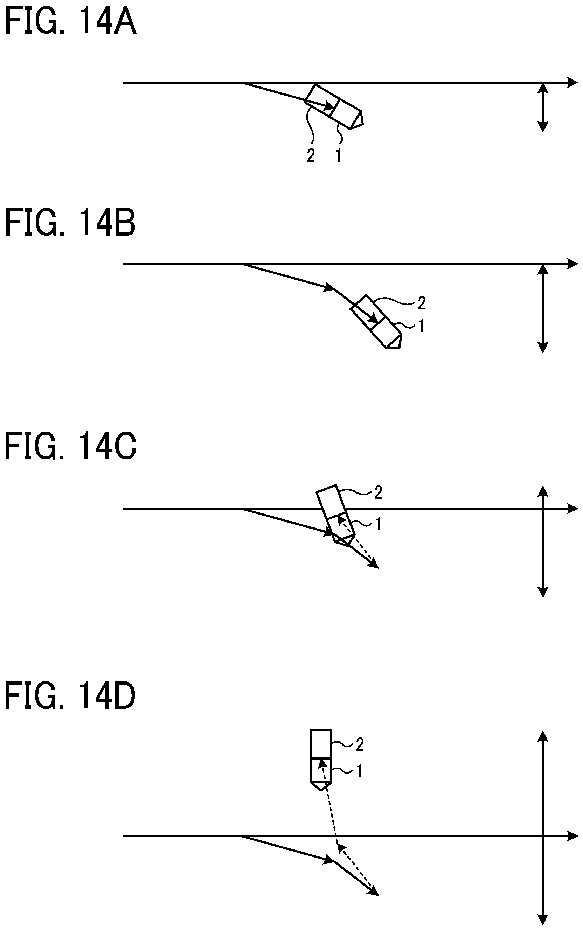

FIG. 14A illustrates a state immediately after the start of turning, and FIG. 14B illustrates a state where the autonomous traveling robot 1 has reached the turning angle of 45 degrees.

When the turning angle of the autonomous traveling robot 1 reaches 45 degrees (step S11: Yes), the backward travel control unit 115 and the turning angle control unit 113 controls the autonomous traveling robot 1 to turn to the right while moving backward with the turning angle kept at 45 degrees (step S12). This state is illustrated in FIG. 14C. The solid line in FIG. 14C represents the movement trajectory of the autonomous traveling robot 1 moving forward, and the dotted line represents the moving trajectory of the autonomous traveling robot 1 moving backward. As can be seen from FIG. 14C, when the autonomous traveling robot 1 is controlled to turn to the right while moving back, the autonomous traveling robot 1 can turn in a direction in which the turning angle increases.

In step S13, the turning angle control unit 113 determines whether or not the autonomous traveling robot 1 has turned further 45 degrees while turning to the right and moving back. The fact that the autonomous traveling robot 1 further turns 45 degrees (step S13: Yes) means that the autonomous traveling robot 1 turns 90 degrees in total. In this state, as illustrated in FIG. 14D, the backward travel control unit 115 moves back the autonomous traveling robot 1 and the basket cart 2, and the stop control unit 114 stops the autonomous traveling robot 1. Then, the connecting-disconnecting unit 116 disconnects the basket cart 2 at the disconnection position (steps S5 to S7).

In the second embodiment, the autonomous traveling robot 1 is controlled to turn 45 degrees while moving forward in the first step, and rotate 45 degrees while moving back in the second step. The vertical double-headed arrow in both directions illustrated in FIGS. 14A to 14D indicates the turning range of the autonomous traveling robot 1.

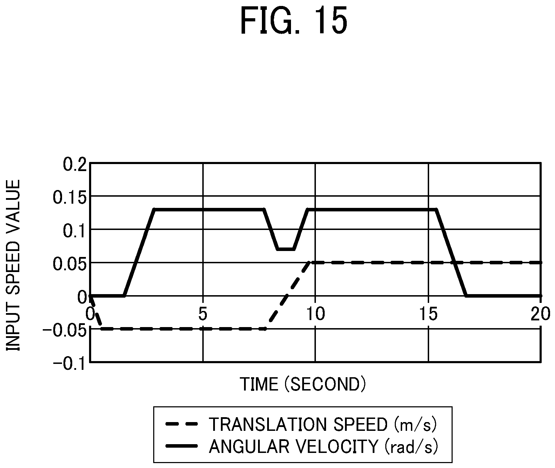

FIG. 15 is a graph illustrating speed values input to the autonomous traveling robot 1 of the conveyance system according to the second embodiment. In FIG. 15, the solid line graph represents the rotational angular velocity (rad/s), and the dotted line graph indicates the translational speed (m/s). As can be seen from FIG. 15, in the second embodiment, the autonomous traveling robot 1 is controlled to turn while moving forward, and, after rotation of 45 degrees, controlled to turn further 45 degrees while moving backward.

In the conveyance system according to the second embodiment, with such multi-step turning, the autonomous traveling robot 1 can turn in a narrow range as illustrated in FIG. 14C, and the effect similar to that of the first embodiment described above can be obtained.

A conveyance system according to a third embodiment not covered by the appended claims is described below. In the first embodiment described above, the autonomous traveling robot 1 is turned up to 90 degrees at a time. By contrast, in the third embodiment, the autonomous traveling robot 1 is controlled to turn in multiple stages by, for example, 30 degrees in each stage (an example of the split turning angle). In this example, the autonomous traveling robot 1 can turn and move back in a narrower range. Note that the third embodiment described below is different only in this respect from the embodiments described above. Accordingly, only the difference is described below, and redundant description is omitted.

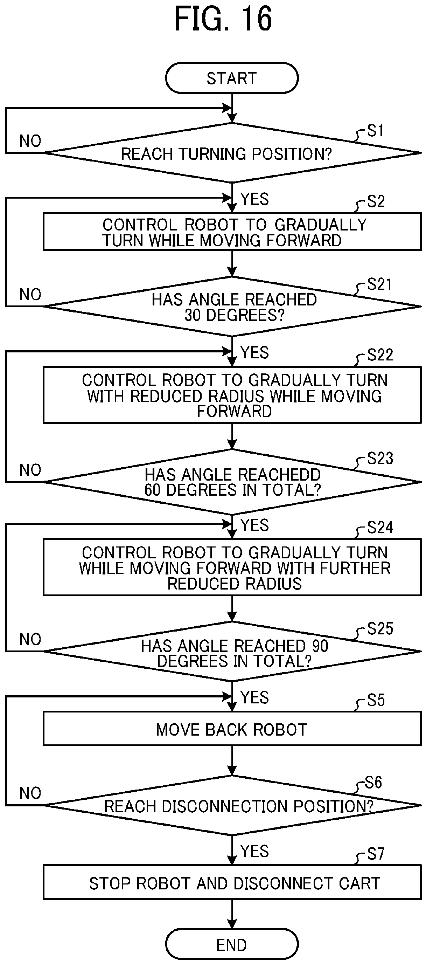

FIG. 16 is a flowchart illustrating the flow of autonomous traveling control of the autonomous traveling robot 1 in the conveyance system according to the third embodiment. In the flowchart of FIG. 16, similar to the first embodiment described above, the autonomous traveling robot 1 that has reached the turning position is controlled to turn while moving forward (steps S1 and S2).

In the third embodiment, in step S21, the turning angle control unit 113 determines whether or not the turning angle of the autonomous traveling robot 1 has reached 30 degrees. In step S22, the turning angle control unit 113 and the forward travel control unit 112 control the autonomous traveling robot 1 to gradually turn with a reduced turning radius while moving forward. While thus controlling the autonomous traveling robot 1 to turn by another 30 degrees with the reduced turning radius, the turning angle control unit 113 determines whether or not the total turning angle becomes 60 degrees in step S23.

Based on a determination that the total turning angle has reached 60 degrees (step S23: Yes), in step S24, the turning angle control unit 113 and the forward travel control unit 112 control the autonomous traveling robot 1 to gradually turn with a further reduced turning radius while moving forward. While thus controlling the autonomous traveling robot 1 to turn anther 30 degrees with the reduced turning radius, the turning angle control unit 113 determines whether or not the total turning angle becomes 90 degrees in step S25.

Based on a determination that the total turning angle of the autonomous traveling robot 1 has reached 90 degrees (step S25: Yes), the backward travel control unit 115 moves back the autonomous traveling robot 1 and the basket cart 2, and the stop control unit 114 stops the autonomous traveling robot 1. Then, the connecting-disconnecting unit 116 disconnects the basket cart 2 at the disconnection position (steps S5 to S7).

In the third embodiment, the autonomous traveling robot 1 is controlled to turn 30 degrees while moving forward in the first step, and turn 30 degrees with the reduced turning radius while moving forward in the second step. Then, in the third step, the autonomous traveling robot 1 is controlled to turn 30 degrees with the further reduced turning radius while moving forward. By turning while gradually reducing the turning radius in this way, the autonomous traveling robot 1 can turn in a narrower range, and the same effect as that of each of the above-described embodiments can be obtained.

A conveyance system according to a fourth embodiment is described below. In the first embodiment described above, the autonomous traveling robot 1 is controlled to turn up to 90 degrees while moving forward at a constant speed. By contrast, in the fourth embodiment, the autonomous traveling robot 1 is controlled to move forward at, for example, two different speeds and turn up to 90 degrees. Note that the fourth embodiment described below is different only in this respect from the embodiments described above. Accordingly, only the difference is described below, and redundant description is omitted.

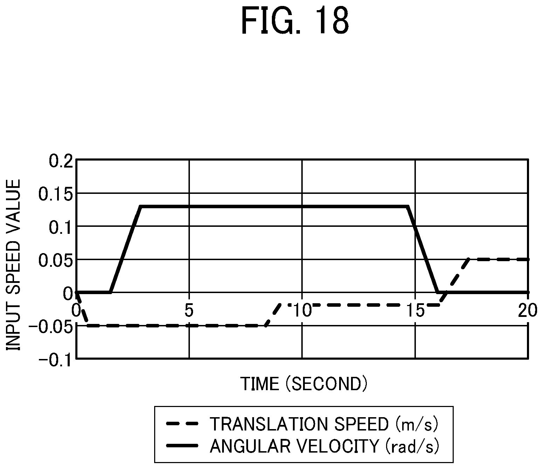

FIG. 18 is a graph illustrating speed values input to the autonomous traveling robot 1 of the conveyance system according to the fourth embodiment. In FIG. 18, the solid line graph represents the rotational angular velocity (rad/s), and the dotted line graph indicates the translational speed (m/s). As illustrated in FIG. 18, in the fourth embodiment, the autonomous traveling robot 1 is controlled to turn up to 90 degrees while moving forward. However, the forward travel control unit 112 slows down the speed of forward movement (translational speed) by a predetermined amount when the turning angle of the autonomous traveling robot 1 reaches, for example, about 45 degrees. The turning radius can be reduced as the forward speed (translation speed) is slowed down by a predetermined amount in mid course of turning up to 90 degrees of the autonomous traveling robot 1.

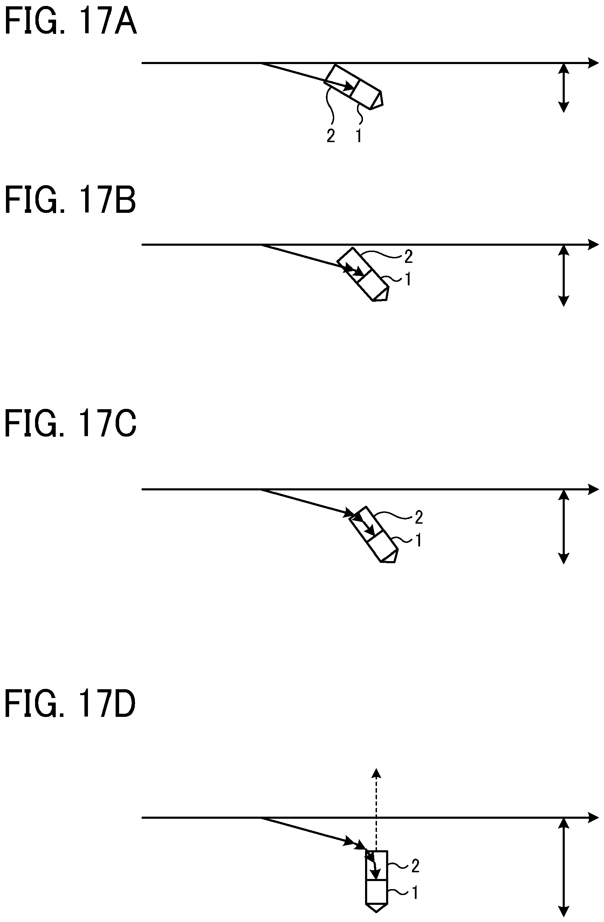

FIG. 17A illustrates the state of the autonomous traveling robot 1 immediately after the start of turning, and FIG. 17B illustrates the state of the autonomous traveling robot 1 that has turned about 45 degrees. The forward travel control unit 112 slows down the translation speed when the autonomous traveling robot 1 has turned about 45 degrees. As a result, as illustrated in FIGS. 17C and 17D, the autonomous traveling robot 1 can be further turned 45 degrees with the turning radius reduced.

When the total turning angle of the autonomous traveling robot 1 becomes 90 degrees, the backward travel control unit 115 moves back the autonomous traveling robot 1 and the basket cart 2, and the connecting-disconnecting unit 116 disconnects the basket cart 2 at the disconnection position.

In the fourth embodiment, since the translation speed is slowed down in mid course of 90-degree turning of the autonomous traveling robot 1, the turning radius can be reduced in mid course of the turning, and the autonomous traveling robot 1 can turn and move back in a narrow range. In addition, effects similar to those of the embodiments described above can be attained.

A conveyance system according to a fifth embodiment is described below. In the first embodiment described above, the autonomous traveling robot 1 is controlled to turn up to 90 degrees while moving forward at a constant speed. By contrast, in the fifth embodiment, the autonomous traveling robot 1 is controlled to turn up to 45 degrees while moving forward, move straight backward a predetermined distance, and then turn further 45 degrees while moving backward. Thus, turning and moving back is performed. Note that the fifth embodiment described below is different only in this respect from the first embodiment as described above. Accordingly, only the difference is described below, and redundant description is omitted.

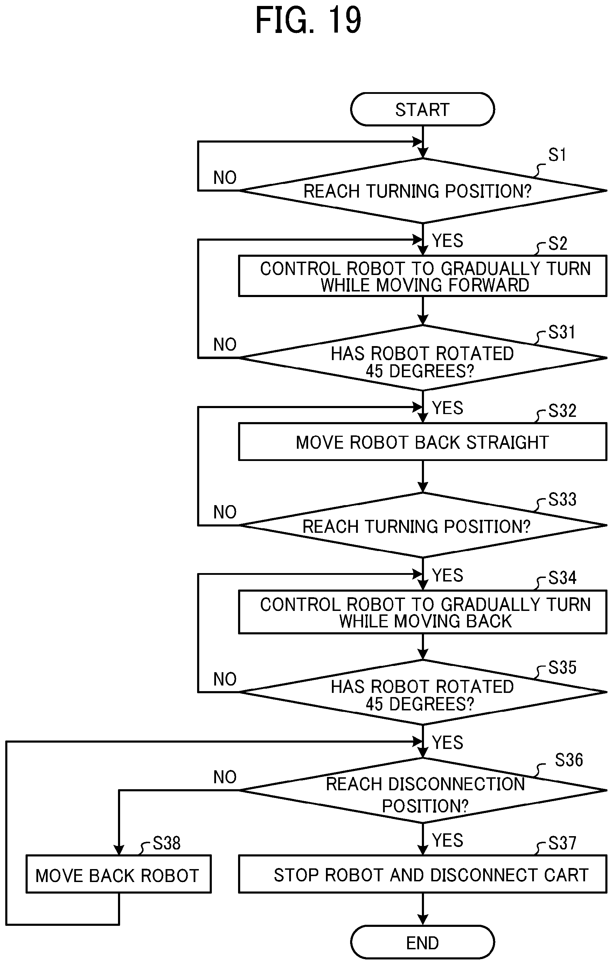

FIG. 19 is a flowchart illustrating the flow of autonomous traveling control of the autonomous traveling robot 1 in the conveyance system according to the fifth embodiment. In the flowchart of FIG. 19, similar to the first embodiment described above, the autonomous traveling robot 1 that has reached the turning position is controlled to turn while moving forward (steps S1 and S2).

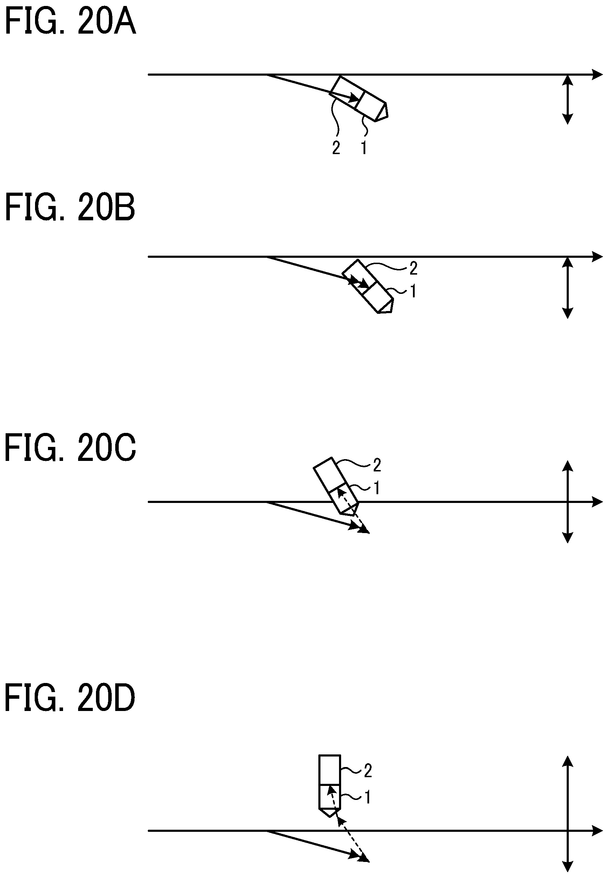

In the fifth embodiment, the turning angle control unit 113 determines, in step S31, whether or not the turning angle of the autonomous traveling robot 1 has reached 45 degrees. FIG. 20A illustrates a state immediately after the start of turning, and FIG. 20B illustrates a state where the turning angle has reached 45 degrees.

Based on a determination that the turning angle of the autonomous traveling robot 1 has reached 45 degrees (step S31: Yes), the backward travel control unit 115 controls the autonomous traveling robot 1 to move straight back as illustrated in FIG. 20C in step S32. The self-position detection unit 111 determines whether or not the autonomous traveling robot 1 moving backward has reached the turning position (step S33).

In response to a determination that the autonomous traveling robot 1 is at the turning position (step S33: Yes), the backward travel control unit 115 and the turning angle control unit 113 controls the autonomous traveling robot 1 to turn to the right while moving backward (step S34). This state is illustrated in FIG. 20D.

In step S35, the turning angle control unit 113 determines whether or not the autonomous traveling robot 1 has further turned 45 degrees to the right while moving back. The fact that the autonomous traveling robot 1 further turns 45 degrees (step S35: Yes) means that the autonomous traveling robot 1 turns 90 degrees in total. In this state, as illustrated in FIG. 20D, the autonomous traveling robot 1 and the basket cart 2 are moved back, and the basket cart 2 is disconnected at the disconnection position (steps S36 to S38).

In the fifth embodiment, the autonomous traveling robot 1 is controlled to turn 45 degrees while moving forward in the first step, move back in the second step, and turn 45 degrees while moving back in the third step.

In the conveyance system according to the fifth embodiment, with such multi-step turning, the autonomous traveling robot 1 can turn in a narrow range as illustrated in FIGS.

20A to 20D. In addition, effects similar to those of the embodiments described above can be attained.

For example, in the description of each of the above-described embodiments, in the basket cart 2, the four casters 23 are rotatable (pivotable) in the direction parallel to the contact surface. Alternatively, at least two casters on the coupling device 10 side may be swivel casters that are rotatable (change directions) parallel to the contact surface, and two casters on the side opposite the coupling device 10 may be rigid casters that do not change direction. The same effect as described above can be obtained also in this case.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An autonomous traveling device (1) configured to tow a cart (2) including a caster (23), the caster (23) configured to swivel around an axis (CP) perpendicular to a rotation axis (SP) of a wheel (23a), the autonomous traveling device (1) comprising:
a sensor (3) configured, when the autonomous traveling device (1) is in a line trace travelling mode, to detect a guide path indicating a travelling route of the autonomous traveling device (1), whereby the autonomous travelling device (1) is configured to recognize the traveling route and automatically travel along the traveling route;
a drive wheel (71);
a self-position detection unit (111) configured to detect a position of the autonomous traveling device (1);
a forward travel control unit (112) configured to drive the drive wheel (71) to move the autonomous traveling device (1) towing the cart (2) forward;
a backward travel control unit (115) configured to drive the drive wheel (71) to move the autonomous traveling device (1) towing the cart (2) backward; and
a turning control unit (113) configured to drive the drive wheel (71) to turn the autonomous traveling device (1) towing the cart (2),
**characterized in that**, in response to a detection by the self-position detection unit (111) that the autonomous traveling device (1) towing the cart (2) is at a turning position:
the autonomous traveling device (1) is configured to shift from the line trace traveling mode to an autonomous traveling mode and move away from the guide path, wherein, in the autonomous traveling mode:
the forward travel control unit (112), the backward travel control unit (115) and the turning control unit (113) are configured to drive
the drive wheel (71) so that the autonomous traveling device (1) turns by a predetermined angle while moving forward or backward, and
wherein, based on a determination by the self-position detection unit (111) that the autonomous traveling device (1) towing the cart (2) is at a moving-back position, the backward travel control unit (115) is configured to drive the drive wheel (71) to move the autonomous traveling device (1) backward to a target position,
wherein the turning control unit (113) is configured to divide the predetermined angle into a plurality of split turning angles,
wherein the forward travel control unit (112) and the turning control unit (113) are configured to drive the drive wheel (71) so that the autonomous traveling device (1) towing the cart (2) turns by one of the plurality of split turning angles while moving forward, and while gradually or stepwise reducing a turning radius of the autonomous traveling device (1) towing the cart (2), and
wherein the backward travel control unit (115) and the turning control unit (113) are configured to drive the drive wheel (71) of the autonomous traveling device (1) so that the autonomous traveling device (1) towing the cart (2) turns by the rest of the plurality of split turning angles while moving backward.

2. The autonomous traveling device (1) according to claim 1
wherein, in turning by the predetermined angle of the autonomous traveling device (1) towing the cart (2) while moving forward, the forward travel control unit (112) is configured to control the drive wheel (71) with a translation signal for moving forward the autonomous traveling device, and the turning control unit (113) is configured to control the drive wheel (71) with a turning signal for turning the autonomous traveling device (1).

3. A method for controlling autonomous traveling of an autonomous traveling device (1) with a towed cart (2) including a caster (23), the caster (23) configured to swivel around an axis perpendicular to a rotation axis of a wheel (23a), the method comprising:
detecting, in a line trace travelling mode of the autonomous traveling device (1), a guide path indicating a travelling route of the autonomous traveling device (1), whereby the autonomous travelling device (1) recognizes the traveling route and automatically travels along the traveling route;
detecting (S1) a position of the autonomous traveling device (1);
**characterized in that**
in response to a detection that the autonomous traveling device (1) towing the cart (2) is at a turning position:
shifting the autonomous traveling device (1) from the line trace traveling mode to an autonomous traveling mode and moving the autonomous traveling device (1) away from the guide path; and, in the autonomous travelling mode:
driving (S2) a drive wheel (71) of the autonomous traveling device (1) so that the autonomous traveling device (1) turns by a predetermined angle while moving forward or backward; and
driving (SS) the drive wheel (71) to move the autonomous traveling device (1) backward to a target position based on a determination that the autonomous traveling device (1) towing the cart (2) is at a moving-back position,
wherein the driving (S2) a drive wheel (71) of the autonomous traveling device (1) so that the autonomous traveling device (1) turns by a predetermined angle comprises:
dividing the predetermined angle into a plurality of split turning angles;
driving (S2) the drive wheel (71) so that the autonomous traveling device (1) towing the cart (2) turns by one of the plurality of split turning angles while moving forward, and while gradually or stepwise reducing a turning radius of the autonomous traveling device (1) towing the cart (2); and
driving (S12) the drive wheel (71) of the autonomous traveling device (1) so that the autonomous traveling device (1) towing the cart (2) turns by the rest of the plurality of split turning angles while moving backward

4. Carrier means carrying computer readable code for controlling a computer to carry out the method according to claim 3.

## Patentansprüche

1. Autonome Fahrvorrichtung (1), welche zum Schleppen eines Wagens (2) konfiguriert ist, umfassend eine Laufrolle (23), wobei die Laufrolle (23) konfiguriert ist, um um eine Achse (CP) senkrecht zu einer Drehachse (SP) eines Rads (23a) zu schwenken, wobei die autonome Fahrvorrichtung (1) umfasst:
einen Sensor (3), der konfiguriert ist, wenn sich die autonome Fahrvorrichtung (1) in einem Linienverfolgungsfahrmodus befindet, einen Führungspfad zu erfassen, der eine Fahrroute der autonomen Fahrvorrichtung (1) angibt, wodurch die autonome Fahrvorrichtung (1) konfiguriert ist, die Fahrtroute zu erkennen und automatisch entlang der Fahrtroute zu fahren;
ein Antriebsrad (71);
eine Eigenpositionserfassungseinheit (111), die dazu konfiguriert ist, eine Position der autonomen Fahrvorrichtung (1) zu erfassen;
eine Vorwärtsfahrtsteuereinheit (112), die so konfiguriert ist, dass sie das Antriebsrad (71) antreibt, um die autonome Fahrvorrichtung (1), die den Wagen (2) schleppt, vorwärts zu bewegen;
eine Rückwärtsfahrsteuereinheit (115), die konfiguriert ist, um das Antriebsrad (71) anzutreiben, um die autonome Fahrvorrichtung (1), die den Wagen (2) schleppt, rückwärts zu bewegen; und
eine Wendesteuereinheit (113), die so konfiguriert ist, dass sie das Antriebsrad (71) antreibt, um die autonome Fahrvorrichtung (1), die den Wagen (2) schleppt, zu wenden,
**dadurch gekennzeichnet**, als Reaktion auf eine Erfassung durch die Eigenpositionserfassungseinheit (111), dass die autonome Fahrvorrichtung (1), die den Wagen (2) schleppt, sich in einer Wendeposition befindet:
die autonome Fahrvorrichtung (1) dazu konfiguriert ist, von dem Linienverfolgungsfahrmodus in einen autonomen Fahrmodus zu wechseln und sich von dem Führungspfad wegzubewegen, wobei in dem autonomen Fahrmodus:
die Vorwärtsfahrtsteuereinheit (112), die Rückwärtsfahrtsteuereinheit (115) und die Wendesteuereinheit (113) zum Antreiben des Antriebsrads (71) konfiguriert sind, so dass die autonome Fahrvorrichtung (1) sich um einen vorbestimmten Winkel wendet, während sie sich vorwärts oder rückwärts bewegt, und
wobei, basierend auf einer Bestimmung durch die Eigenpositionserfassungseinheit (111), dass sich die autonome Fahrvorrichtung (1), die den Wagen (2) schleppt, in einer Rückfahrposition befindet, die Rückwärtsfahrtsteuereinheit (115) zum Antreiben des Antriebsrads (71) konfiguriert ist, um die autonome Fahrvorrichtung (1) rückwärts zu einer Zielposition zu bewegen,
wobei die Wendesteuereinheit (113) dazu konfiguriert ist, den vorbestimmten Winkel in eine Vielzahl von geteilten Drehwinkeln zu teilen,
wobei die Vorwärtsfahrtsteuereinheit (112) und die Wendesteuereinheit (113) so konfiguriert sind, dass sie das Antriebsrad (71) antreiben, sodass die autonome Fahrvorrichtung (1), die den Wagen (2) schleppt, um einen der Vielzahl von geteilten Wendewinkeln wendet, während sie sich vorwärtsbewegt, und während sie allmählich oder schrittweise einen Wenderadius der autonomen Fahrvorrichtung (1) verringern, die den Wagen (2) schleppt, und
wobei die Rückwärtsfahrtsteuereinheit (115) und die Wendesteuereinheit (113) konfiguriert sind, um das Antriebsrad (71) der autonomen Fahrvorrichtung (1) anzutreiben, so dass die autonome Fahrvorrichtung (1), die den Wagen (2) schleppt, um den Rest der Vielzahl von geteilten Wendewinkeln wendet, während sie sich rückwärts bewegt.

2. Autonome Fahrvorrichtung (1) nach Anspruch 1,
wobei, beim Wenden um den vorbestimmten Winkel der autonomen Fahrvorrichtung (1), die den Wagen (2) schleppt, während der Vorwärtsbewegung, die Vorwärtsfahrtsteuereinheit (112) konfiguriert ist, um das Antriebsrad (71) mit einem Übersetzungssignal zum Vorwärtsbewegen der autonomen Fahrvorrichtung zu steuern, und die Wendesteuereinheit (113) konfiguriert ist, das Antriebsrad (71) mit einem Wendesignal zum Wenden der autonomen Fahrvorrichtung (1) anzusteuern.

3. Verfahren zum Steuern des autonomen Fahrens einer autonomen Fahrvorrichtung (1) mit einem geschleppten Wagen (2), der eine Laufrolle (23) enthält, wobei die Laufrolle (23) konfiguriert ist, um um eine Achse zu schwenken, die senkrecht zu einer Drehachse eines Rads (23a) ist, wobei das Verfahren umfasst:
Erfassen, in einem Linienverfolgungsfahrmodus der autonomen Fahrvorrichtung (1), eines Führungspfads, der eine Fahrtroute der autonomen Fahrvorrichtung (1) angibt, wodurch die autonome Fahrvorrichtung (1) die Fahrtroute erkennt und automatisch entlang der Fahrtroute fährt;
Erfassen (S1) einer Position der autonomen Fahrvorrichtung (1);
**dadurch gekennzeichnet, dass**
als Reaktion auf eine Erfassung, dass sich die autonome Fahrvorrichtung (1), die den Wagen (2) schleppt, in einer Wendeposition befindet:
Versetzen der autonomen Fahrvorrichtung (1) von dem Linienverfolgungsfahrmodus in einen autonomen Fahrmodus und Entfernen der autonomen Fahrvorrichtung (1) von dem Führungspfad; und, im autonomen Fahrmodus:
Antreiben (S2) eines Antriebsrads (71) der autonomen Fahrvorrichtung (1), so dass sich die autonome Fahrvorrichtung (1) um einen vorbestimmten Winkel wendet, während sie sich vorwärts oder rückwärts bewegt; und
Antreiben (SS) des Antriebsrads (71), um die autonome Fahrvorrichtung (1), basierend auf einer Bestimmung, dass sich die autonome Fahrvorrichtung (1), die den Wagen (2) schleppt, sich in einer Rückfahrposition befindet, rückwärts zu einer Zielposition zu bewegen,
wobei das Antreiben (S2) eines Antriebsrads (71) der autonomen Fahrvorrichtung (1), so dass die autonome Fahrvorrichtung (1) um einen vorbestimmten Winkel wendet, umfasst:
Unterteilen des vorbestimmten Winkels in eine Vielzahl von geteilten Wendewinkeln;
Antreiben (S2) des Antriebsrades (71), so dass die autonome Fahrvorrichtung (1), die den Wagen (2) schleppt, um einen der Vielzahl von geteilten Wendewinkeln wendet, während sie sich vorwärtsbewegt, und während sie allmählich oder schrittweise einen Wenderadius der autonomen Fahrvorrichtung (1), die den Wagen (2) schleppt, verringert; und
Antreiben (S12) des Antriebsrads (71) der autonomen Fahrvorrichtung (1), so dass die autonome Fahrvorrichtung (1), die den Wagen (2) schleppt, um den Rest der Vielzahl von geteilten Wendewinkeln während der Rückwärtsbewegung wendet.

4. Trägermittel, das einen computerlesbaren Code zum Steuern eines Computers trägt, um das Verfahren nach Anspruch 3 auszuführen.

## Revendications

1. Dispositif à déplacement autonome (1) configuré pour tracter un chariot (2) incluant une roulette (23), la roulette (23) étant configurée pour pivoter autour d'un axe (CP) perpendiculaire à un axe de rotation (SP) d'une roue (23a), le dispositif à déplacement autonome (1) comprenant :
un capteur (3) configuré, lorsque le dispositif à déplacement autonome (1) est en mode de déplacement en suivi de ligne, pour détecter un trajet de guidage indiquant un itinéraire de déplacement du dispositif à déplacement autonome (1), au moyen de quoi le dispositif à déplacement autonome (1) est configuré pour reconnaître l'itinéraire de déplacement et se déplacer automatiquement le long de l'itinéraire de déplacement,
une roue motrice (71),
une unité de détection de position propre (111) configurée pour détecter la position du dispositif à déplacement autonome (1),
une unité de commande de déplacement vers l'avant (112) configurée pour entraîner la roue motrice (71) pour déplacer le dispositif à déplacement autonome (1) tractant le chariot (2) vers l'avant,
une unité de commande de déplacement vers l'arrière (115) configurée pour entraîner la roue motrice (71) pour déplacer le dispositif à déplacement autonome (1) tractant le chariot (2) vers l'arrière,
une unité de commande de braquage (113) configurée pour actionner la roue motrice (71) pour faire tourner le dispositif à déplacement autonome (1) tractant le chariot (2),
**caractérisé en ce que**, en réponse à une détection par l'unité de détection de position propre (111) que le dispositif à déplacement autonome (1) tractant le chariot (2) est dans une position de braquage :
le dispositif à déplacement autonome (1) est configuré pour passer d'un mode de déplacement en suivi de ligne à un mode de déplacement autonome et s'éloigner du trajet de guidage,
dans lequel, dans le mode de déplacement autonome :
l'unité de commande de déplacement vers l'avant (112), l'unité de commande de déplacement vers l'arrière (115) et l'unité de commande de braquage (113) sont configurées pour entraîner la roue motrice (71) de manière à ce que le dispositif à déplacement autonome (1) tourne selon un angle prédéterminé tout en se déplaçant en avant ou en arrière, et
dans lequel, sur la base d'une détermination par l'unité de détection de position propre (111) que le dispositif à déplacement autonome (1) tractant le chariot (2) est dans une position de déplacement vers l'arrière, l'unité de commande de déplacement vers l'arrière (115) est configurée pour actionner la roue motrice (71) pour déplacer le dispositif à déplacement autonome (1) vers l'arrière jusqu'à une position cible,
dans lequel l'unité de commande de braquage (113) est configurée pour diviser l'angle prédéterminé en une pluralité d'angles de braquage divisés,
dans lequel l'unité de commande de déplacement vers l'avant (112) et l'unité de commande de braquage (113) sont configurées pour entraîner la roue motrice (71) de manière à ce que le dispositif à déplacement autonome (1) tractant le chariot (2) tourne selon l'un des angles de braquage divisés, tout en se déplaçant vers l'avant, et en réduisant graduellement ou par paliers un rayon de braquage du dispositif à déplacement autonome (1) tractant le chariot (2), et
dans lequel l'unité de commande de déplacement vers l'arrière (115) et l'unité de commande de braquage (113) sont configurées pour entraîner la roue motrice (71) du dispositif à déplacement autonome (1) de manière à ce que le dispositif à déplacement autonome (1) tractant le chariot (2) tourne selon le reste de la pluralité des angles de braquage divisés tout en se déplaçant vers l'arrière.

2. Dispositif à déplacement autonome (1) selon la revendication 1,
dans lequel, lors du braquage selon l'angle prédéterminé du dispositif à déplacement autonome (1) tractant le chariot (2) tout en se déplaçant vers l'avant, l'unité de commande de déplacement vers l'avant (112) est configurée pour commander la roue motrice (71) avec un signal de translation pour déplacer vers l'avant le dispositif à déplacement autonome, et l'unité de commande de braquage (113) est configurée pour commander la roue motrice (71) avec un signal de braquage pour faire tourner le dispositif à déplacement autonome (1).

3. Procédé pour commander un déplacement autonome d'un dispositif à déplacement autonome (1) avec un chariot tracté (2) incluant une roulette (23), la roulette (23) étant configurée pour pivoter autour d'un axe perpendiculaire à un axe de rotation d'une roue (23a), le procédé comprenant :
la détection, dans un mode de déplacement en suivi de ligne du dispositif à déplacement autonome (1), d'un trajet de guidage indiquant un itinéraire de déplacement du dispositif à déplacement autonome (1), moyennant quoi le dispositif à déplacement autonome (1) reconnaît l'itinéraire de déplacement et se déplace automatiquement le long de l'itinéraire de déplacement,
la détection (S1) d'une position du dispositif à déplacement autonome (1),
**caractérisé par**, en réaction à une détection que le dispositif à déplacement autonome (1) tractant le chariot (2) est dans une position de braquage :
le transfert du dispositif à déplacement autonome (1) du mode de déplacement en suivi de ligne à un mode de déplacement autonome et l'éloignement du dispositif à déplacement autonome vis-à-vis du trajet de guidage, et, dans le mode de déplacement autonome :
l'entraînement (S2) d'une roue motrice (71) du dispositif à déplacement autonome (1) de manière à ce que le dispositif à déplacement autonome (1) tourne selon un angle prédéterminé tout en se déplaçant vers l'avant ou vers l'arrière, et
l'entraînement (S5) de la roue motrice (71) pour déplacer le dispositif à déplacement autonome (1) vers l'arrière jusqu'à une position cible sur la base d'une détermination que le dispositif à déplacement autonome (1) tractant le chariot (2) est dans une position de déplacement vers l'arrière,
dans lequel l'entraînement (S2) d'une roue motrice (71) du dispositif à déplacement autonome (1) de manière à ce que le dispositif à déplacement autonome (1) tourne selon un angle prédéterminé comprend :
la division de l'angle prédéterminé en une pluralité d'angles de braquage divisés,
l'entraînement (S2) de la roue motrice (71) de manière à ce que le dispositif à déplacement autonome (1) tractant le chariot (2) tourne selon l'un de la pluralité des angles de braquage divisés, tout en se déplaçant vers l'avant, et en réduisant graduellement ou par paliers un rayon de braquage du dispositif à déplacement autonome (1) tractant le chariot (2), et
l'entraînement (S12) de la roue motrice (71) du dispositif à déplacement autonome (1) de manière à ce que le dispositif à déplacement autonome (1) tractant le chariot (2) tourne selon le reste de la pluralité des angles de braquage divisés tout en se déplaçant vers l'arrière.

4. Moyen de support portant un code lisible par ordinateur pour commander un ordinateur afin d'exécuter le procédé selon la revendication 3.
